# EUROPEAN PATENT SPECIFICATION

(11) **EP 2 375 835 B1**
(45) Date of publication and mention of the grant of the patent: **14.08.2013**
(21) Application number: 10159148.5
(22) Date of filing: 06.04.2010
(51) Int. Cl.: H04W 60/04

(54) **Method and device for a tracking area update of a mobile device in a communication network**
Verfahren und Vorrichtung zur Aktualisierung eines Nachverfolgungsbereichs einer mobilen Vorrichtung in einem mobilen Kommunikationsnetzwerk
Procédé et dispositif pour mise à jour de zone de suivi d'un dispositif mobile dans un réseau de communication

(43) Date of publication of application: 12.10.2011
(73) Proprietor: Telefonaktiebolaget L M Ericsson (publ), 164 83 Stockholm (SE)
(72) Inventor:
(74) Representative: Tonscheidt, Andreas

(56) References cited:
- GB-A- 2 449 228
- US-A1- 2009 181 672

## Description

### Technical field

The present invention relates to a method for a tracking area update of a mobile device in a communication network. A device and a program embodying the invention are also described.

### Background

In today's mobile wireless networks like GSM, WCDMA or CDMA systems, the area in which transfer of radio signals between a mobile device and a selected base station is possible, can change when the device moves. A base station is a wireless communications station for providing access of mobile devices to the mobile wireless network. The area covered by a base station, or a subunit of it, is frequently referred to as a cell. In order for incoming calls to be received, the mobile device is located. This means that the system determines where the device currently is. When the mobile device is idle, i.e. switched on and not active in a call, its mobility is tracked by the system using the concept of registration areas. Often, e.g. in GSM, the location is tracked by the core network of the system. Examples of the concept of registration areas are the location areas (LAs) in GSM, registration areas (RAs) in GPRS, or tracking area (TA) lists in LTE. A location area is a set of one or more cells which are grouped together to optimize signaling to and from mobile devices.

Because of geographical mobility, or due to changes in the coverage of the registration areas, mobile devices in idle mode update their registration towards the core network when they cross the border between registration areas. This process is generally referred to as registration area update or registration update procedure and it can cause excess registration traffic.

The definition of those registration areas is performed by the mobile network taking into account the signaling load due to registration updates as well as the signaling load due to paging.

Regarding the signaling load due to registration updates, the smaller the registration areas the higher the probability that a mobile device will have to update its registrations when it is moving from one area to another, thus creating signaling load on the area and network nodes. Furthermore by having to perform frequent updates the battery resources of the mobile device are consumed.

Regarding the signaling load due to paging, when the network has to locate a mobile device which is in idle-mode, it shall locate the exact cell where the mobile device is, but its location can only be known at registration area level. The network then needs to page the mobile device in all and every cell in the registration area in order to get a response identifying the appropriate cell. This creates signaling load on a registration area proportional to the amount of subscribers in the area.

In order to reduce the signaling load due to registration updates, the registration areas should be defined as big as possible, while in order to reduce the signaling load due to paging the registration areas should be defined as small as possible.

One problem with the concept of TA lists in Long Term Evolution (LTE) is that no means are provided for selecting an optimal set/list of TAs for each mobile device. In 3GPP TS 23.401 the only constraint defined is that all the tracking areas in a TA list to which a mobile device is registered are served by the same serving Mobility Management Entity (MME). The MME is the key control-node for the LTE access-network. It is responsible for tracking and paging procedures of mobile devices in idle mode. Considering that MMEs could serve big amounts of TAs, there can still be a choice of the actual members of the TA List for a mobile device.

Examples of possible methods for choosing the members of the TA list can be: The mobile devices are randomly assigned different overlapping lists of TAs so that crossing each TA-border only implies a registration update for a subset of the mobile devices. Alternatively, the mobile devices which have registered repeatedly in e.g. 2 or 3 areas within a short period of time are given a TA list which includes those 2 or 3 areas whenever possible. Another method could be to give the mobile devices a list of TAs which is geographically centered at the TA in which the mobile devices are currently located. As a fourth solution the network can keep a detailed history of the mobility of each mobile device through all TAs where it has been in the past. This historical data could be used in order to define a TA list which would minimize the probability of registration updates while still keeping the list short.

The use of historical data is a solution that could provide a good optimization for the majority of the mobile devices. This solution could, for instance, cover mobile device users that spend most of the time being located in the TAs corresponding to their home, their office, and their preferred way to work (highway, city streets, etc.). Such a list of TAs could be good for those users, but would nevertheless be unlikely to be proposed by the network without the usage of historical information.

The solution of using historical data on the network side has some drawbacks. First, usage of historical data implies the maintenance of a big amount of data. This data is not to be used just locally by one MME but should be made available to any MME to which the mobile device might register. Second, the MME (core network) has only partial knowledge of the position of the UE, for instance, as long as a UE stays within the last assigned list of TAs, the MME does not know which exact TA the UE is located in or how it is moving among them. The MME does not know either if the UE is located in a cell at the very border of a TA, or in the very middle of it. Third, an algorithm would need to be executed over this data in order to get the most-likely-subset-of-TAs, per mobile device. Considering the big amount of mobile devices that might be served by an MME, this implies significant processing load. Finally the usage of historical data requires the maintenance and usage of mobile device related information which can be considered sensitive and could cause privacy concerns by regulators.
Another example is shown in document US 2009/0181672, Qualcomm, 16/7/2009.

### Summary

It is an object of the present invention to obviate the above disadvantages and provide an advantageous method for a tracking area update of a mobile device in a communication network.

According to the invention, the method described in claim 1 is performed. Furthermore, the invention is embodied in a device and a program as described in the further independent claims. Embodiments of the invention are described in the dependent claims.

A method for a tracking area update of a mobile device in a communication network is proposed. A network entity sends a list of tracking area identities to the mobile device. The mobile device sends a further list of tracking area identities to the network entity.

Furthermore, the invention can be embodied in a device for a mobile communication network. The mobile device comprises a transceiver unit for transmitting and receiving lists of registration areas and indications of registration areas to and from a network entity. Further the device comprises a memory for storing the lists of registration areas and the indications of registration areas. The mobile device also comprises a processing unit which is adapted to generate further lists of registration areas and indications of registration areas.

The method can also be embodied in a program which is, for example, stored on a data carrier or loadable into a processing system of a mobile device, e.g. as a sequence of signals.

The proposed method and devices allow an advantageous tracking area update of a mobile device in a communication network.

The foregoing and other objects, features and advantages of the present invention will become more apparent in the following detailed description of preferred embodiments as illustrated in the accompanying drawings.

### Brief description of the drawings

Fig. 1 shows a flow diagram of the proposed method of the invention.
Fig. 2 shows a signaling diagram of the mobile device attach procedure according to the 3GPP TS 23.401 v8.4.0.
Fig. 3 shows a signaling diagram of the tracking area update procedure when the serving gateway changes, according to the 3GPP TS 23.401 v8.4.0.
Fig. 4 shows a device which is adapted to perform the proposed method.

### Detailed description

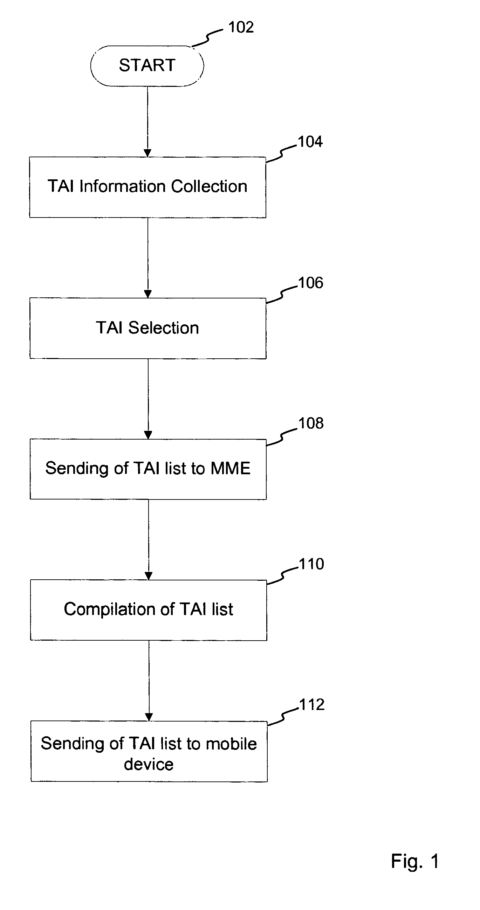

Figure 1 shows a flow diagram of the proposed method of the invention.

In step 102 the method is started. In step 104, information on Tracking Area Identities (TAIs) is collected by the mobile device. This can be performed e.g. by a function within the mobile device. This function could collect information on all the TAIs of tracking areas (TAs) where the mobile device is located while registered in the network. The TAI values can be known to the mobile device either by broadcasted information or from explicit signaling messages. This information may include the times when a TA was entered and left, and may also include information on events that occurred while the mobile device was within a TA, like, for example, time spent in idle or connected mode, pages received while in the TA or self initiated idle to active transitions.

Using the information described above, including the TAI of the TA where the mobile device is currently located, a number of TAIs can be selected by the mobile device in step 106. These TAIs can be the ones that the mobile device may forecast that it will restrict its location in the near future with high probability. These TAIs will be called "TAI Proposal" from now on. The mobile device can compile the TAI proposal e.g. by including in the TAI proposal all those TAs where it has spent at least 10% of its time during the last 7 days.

In an embodiment, the mobile device could include in the TAI proposal all those TAs which, according to its historical data from the last 7 days, it has visited within 1 hour after having been in the TA in which it is currently located. "Currently located" signifies the TA where the mobile device is located when sending the TAI proposal.

In another embodiment, a mobile device with integrated navigation system could use route-planning information in order to compile the TAI proposal. If the user is using the navigation system in the mobile device at some point in time, the mobile device can with high probability forecast the mobility pattern of the user. Knowing the corresponding TAI values e.g. from historical data or by them having been made available as an extension to the navigation system, it can use this forecast to compile TAI lists. In this embodiment, step 104 may include getting information on the geographical coordinates defining each TA in an operator's network, or a subset of those.

In a further embodiment, the mobile device could offer a user interface through which a user of the device could manually select the areas in which he/she intends to move in the near future. In this way the user could define manually the TAIs include in the TAI proposal sent to the MME.

In step 108, the TAI proposal is sent from the mobile device to the MME as part of normal signaling procedures between the mobile device and the MME.

The mobile device can send the TAI proposal to the network as a list of TAIs, ordered according to preference. In an embodiment the list of TAIs, may include an associated probability for each TAI. This probability can be used to inform the network about how likely it is that the mobile device will move to each particular TAI in the near future.

Having received the TAI proposal from the mobile device, in step 110, the MME compiles the TAI list which will be sent to the mobile device. The MME can optimize the actual TAI list by including as many TAs from the TAI proposal as possible. In case not all TAs in the proposal can be included in the list the preference or the probability mentioned above may be selection criteria for deciding which TAs will be included in the TAI list sent to the mobile device.

In an embodiment, the MME may use further criteria in addition to the TAI proposal in order to compile the TAI list sent to the mobile device. For example, the MME might know which TAIs belong to different Serving Gateway (SGW) service areas and try not to mix TAIs in different SGW service areas into the same TAI list. The SGW is a gateway in evolved packet core architecture which routes and forwards user data packets and also acts as the mobility anchor for the user plane during inter-eNodeB handovers and as the anchor for mobility between LTE and other 3GPP technologies. In another embodiment, the MME may impose an upper bound to the amount of TAIs in each TAI list.

Finally in step 112, the MME sends the TAI list that it has compiled to the mobile device as part of normal signaling procedures between the MME and the mobile device.

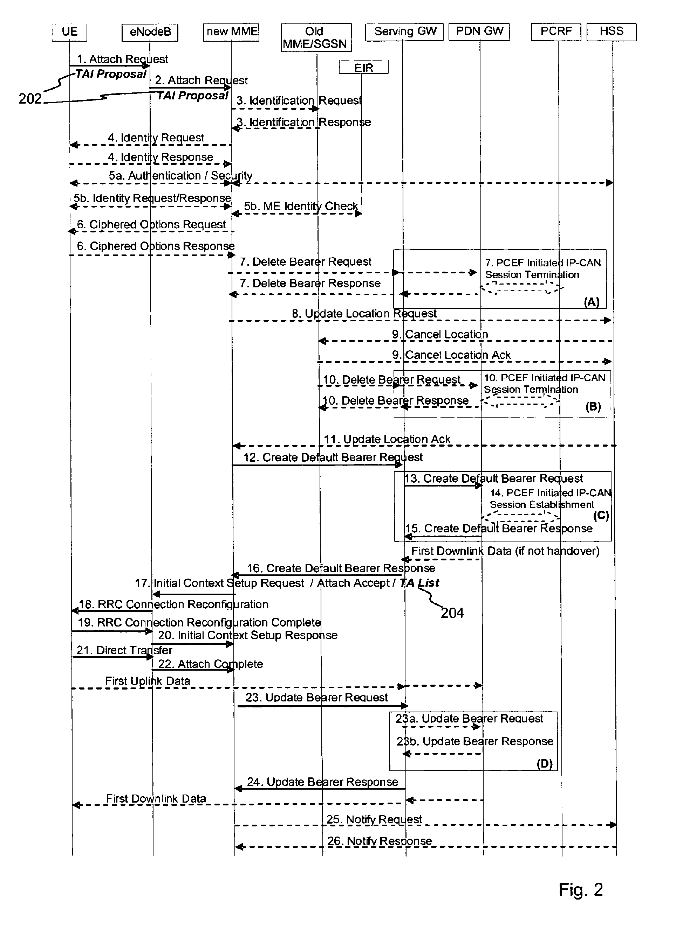

Figure 2 shows a signaling diagram of the mobile device attach procedure according to the 3GPP TS 23.401 v8.4.0. The attach procedure allows the mobile device to register to the network in order to receive services that require registration. According to the invention, in steps 1 and 2 of the signaling flow shown in Figure 2, a TAI list proposal 202 is sent from the mobile device within the "Attach Request" message. The proposal is first sent in step1 to the eNodeB and further forwarded, in step 2, to the MME where the mobile device requests to be attached. The non-access stratum protocol may be amended in order to allow the sending of the TAI proposal together with the "Attach Request" message.

The signaling flow follows the default attach procedure from step 3 until step 16. In these steps, among other actions, the mobile device is identified, bearers are established and the location of the MME is updated if necessary. A detailed description of the signaling steps from 3 to 16 is beyond the scope of this application.

In step 17, the "Attach Accept" message confirms that the mobile device is attached to the network. The "Attach Accept" message, depicted as step 17 in the signaling flow of Figure 2, includes the TAI list 204 that the network sends to the mobile device. According to the invention, before step 17, the MME can consider the TAI proposal 202 received in the "Attach Request" message. The TAI proposal 202 can be used as an input for the MME when it compiles the TAI list 204 which it sends back to the mobile device.

According to an embodiment of the invention, the MME may take the TAI proposal 202 only partly into account i.e. may adopt only some of the TAI from the TAI proposal 202. According to another embodiment, the MME may adopt all of the TAIs in the TAI proposal 202.

The final TAI list 204 sent by the MME to the mobile device may be one of the following:
- A subset of the list proposed by the mobile device. This may be due to the need to limit the size of the TAI list provided to the mobile device.
- A superset of the list proposed by the mobile device.
- A combination of proposed and not proposed TAIs.

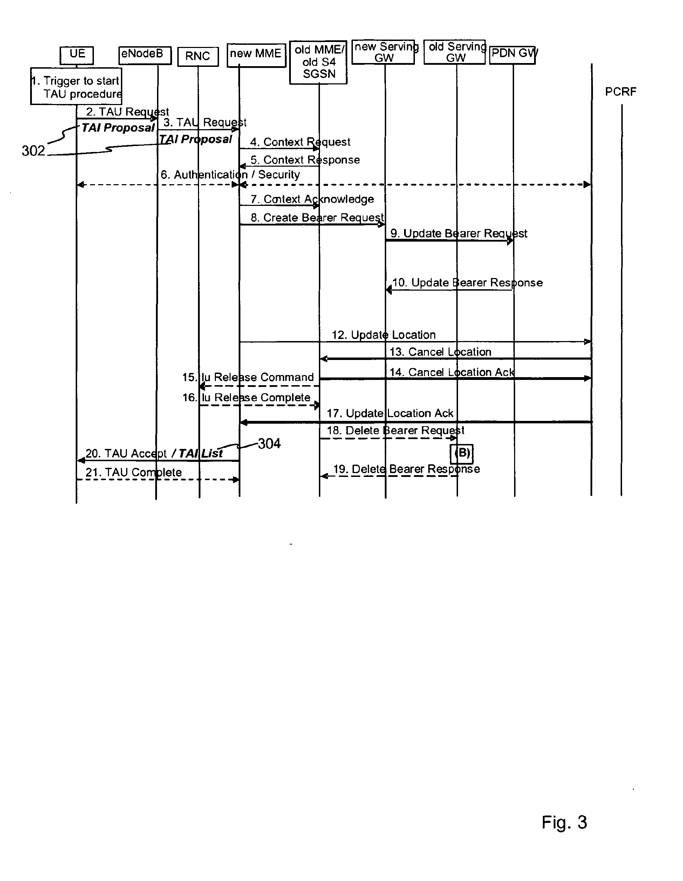

Figure 3 shows a signaling diagram of the tracking area update procedure when the serving gateway changes, according to the 3GPP TS 23.401 v8.4.0. Such an update can be triggered e.g. when the mobile device detects that it has entered a new tracking area that is not in the list of TAls that the mobile device registered with the network.

According to the invention, the mobile device, in steps 2 and 3 of the signaling flow of Figure 3, sends a TAI proposal 302 together with the "TAU Request" message. The TAI proposal 302 can be within the "TAU Request" message. The signaling flow follows the default tracking area update procedure from step 4 up to step 19. The "TAU Accept" message sent in step 20 of the signaling flow from the new MME to the mobile device includes the TAI list that the network sends to the mobile device. According to the invention before step 20, the MME can consider the TAI proposal 302 received in the "TAU Request" message. The TAI proposal 302 can be used as an input for the MME when it compiles the TAI list which it sends back to the mobile device. The non-access stratum protocol may be amended in order to allow the sending of the TAI proposal 302 together with the "TAU Request" message.

In an embodiment of the invention, the mobile device may send a TAI proposal independently from a trigger like the attach request or the tracking area update described above. The sending of the TAI proposal can be triggered by the mobile device itself, e.g. following an expiration of a timer. In such a case the TAI proposal could still be sent as part of normal signaling procedures between the mobile device and the network.

In the prior art the TAI list sent from the MME to the mobile device is fully chosen by the network and cannot be influenced by the mobile device. According to the embodiments described above, the invention provides a way where the mobile device can propose a list of TAIs. In this way the network has the possibility to compile a TAI list taking into account the input sent to it by the mobile device. This way the selection of the list of TAs assigned to each mobile device can be optimized in order to minimize the probability of registration updates while still keeping the load cause by paging small. This can reduce mobility related signaling, which can further provide the following advantages: The mobile device can save battery resources when it is in idle-mode. Also, the signaling load in the network can be reduced. Regarding the collection of the historical data mentioned in the background section, the invention would allow that the task of collecting, maintaining and processing historical data is distributed to each mobile device. For mobile devices with integrated navigation systems, the information available to the mobile device on the planned mobility of the user can be leveraged to optimize the signaling toward the mobile telephony network.

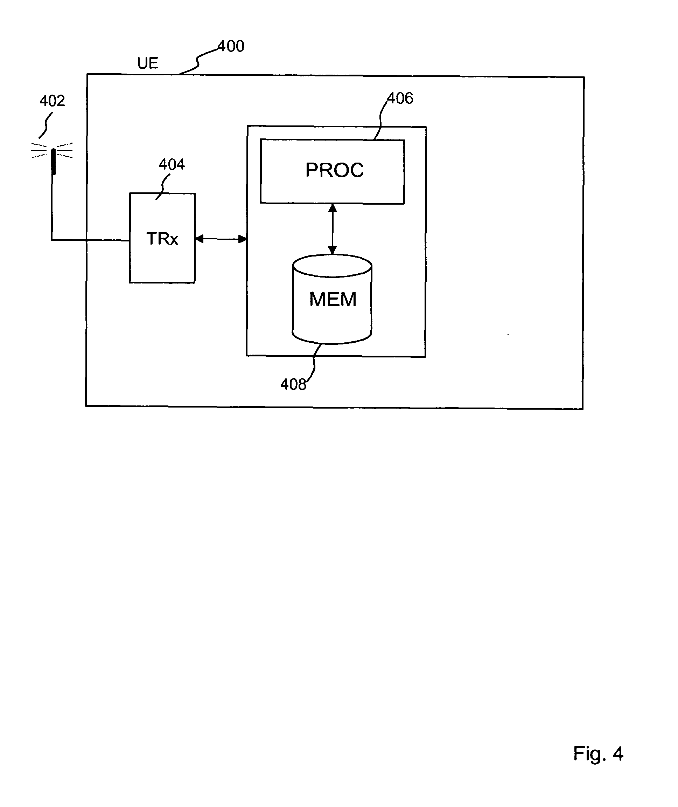

The invention can also be embodied in a device which can be adapted to perform any embodiments of the proposed method as described above. An embodiment of such a device is shown in Figure 4. The device can be a mobile device UE 400, also designated as user equipment. The mobile device 400 can be for example a mobile telephone, a personal digital assistant or a computer with an access module for a mobile network. The mobile device 400 can be adapted to perform any embodiments of the method as described above.

The mobile device UE 400 shown in Figure 4 comprises a transceiver unit 404. The transceiver unit 404 is adapted, through an antenna 402, to receive from the communication network lists of TAIs after the registration updates and also indications of new TAs. Further the transceiver unit 404 is adapted to transmit, also through antenna 402, lists of TAIs and indications of new TAs from the mobile device to e.g. a network entity in a communication network.

The lists received from the communication network are stored in a memory unit 408. The mobile device UE 400 further comprises a processing unit 406 which is adapted to generate lists of registration areas and indications of registration areas. These lists can be generated e.g. based on historical information of the mobility of the mobile device 400. In this case, for example, the mobile device 400 could include in the list generated all those TAs where it has spent at least 10% of its time during the last 7 days. This information could be stored in the memory unit 408 and retrieved from the processing unit 406. The lists generated by the processing unit 406 can be sent to the communication network over the transceiver unit 404.

The above embodiments admirably achieve the objects of the invention. However, it will be appreciated that departures can be made by those skilled in the art without departing from the scope of the invention which is limited only by the claims.

## Claims

1. A method for a tracking area update of a mobile device (400) in a communication network, comprising the steps of
- (112) of a network entity sending a list of tracking area identities to the mobile device (400),
- the mobile device (400) sending a further list of tracking area identities to the network entity, **characterized in that**
the further list of tracking area identities is sent as part of an attach request message (202) for a registration of the mobile device to the communication network.

2. The method according to claim 1, wherein the further list of tracking area identities is sent to the network entity before the network entity sends the list of tracking area identities to the mobile device (400).

3. The method according to claim 1 or 2, wherein the network entity determines if at least one tracking area identity from the further list of tracking area identities sent from the mobile device (400) to the network entity is included in the list of tracking area identities.

4. The method according to any preceding claim, wherein the list of tracking area identities includes tracking areas within which the mobile device (400) does not perform mobility signaling.

5. The method according to any preceding claim, wherein the further list of tracking area identities sent from the mobile device (400) to the network entity is defined based on historical data of a mobility of the mobile device (400).

6. The method according to claim 5, wherein said historical data is used to predict a future mobility of the mobile device (400).

7. The method according to any preceding claim, wherein the further list of tracking area identities sent from the mobile device (400) to the network entity is defined based on information received by an application executed in the mobile device (400).

8. The method according to claim 7, wherein said application is a navigation application.

9. The method according to any preceding claim, wherein the tracking area identities belonging to the further list of tracking area identities are selected by a user of the mobile device (400).

10. A mobile device (400) for a mobile communication network, the mobile device (400) comprising
- a transceiver unit (404) for transmitting and receiving lists of registration areas and indications of registration areas to and from a network entity and a memory unit (408) for storing the lists of registration areas and the indications of registration areas , **characterized in that**, the mobile device (400) further comprises a processing unit (406) adapted to generate further lists of registration areas and indications of registration areas and send them together as part of an attach request messacae (202) for a registration of the mobile device to the communication network.

11. The mobile device according to claim 10, adapted to perform a method according to any of the claims 2 - 9.

12. A program adapted to perform a method according to any of the claims 1 - 9.

## Patentansprüche

1. Verfahren für eine Verfolgungsbereichsaktualisierung eines Mobilgeräts (400) in einem Kommunikationsnetz, umfassend die folgenden Schritte:
- Senden (112) durch eine Netzinstanz einer Liste von Verfolgungsbereichsidentitäten an das Mobilgerät (400),
- Senden durch das Mobilgerät (400) einer weiteren Liste von Verfolgungsbereichsidentitäten an die Netzinstanz, **dadurch gekennzeichnet, dass**
die weitere Liste von Verfolgungsbereichsidentitäten als Teil einer Anschlussanforderungsnachricht (202) für eine Registrierung des Mobilgeräts an das Kommunikationsnetz gesendet wird.

2. Verfahren nach Anspruch 1, wobei die weitere Liste von Verfolgungsbereichsidentitäten an die Netzinstanz gesendet wird, bevor die Netzinstanz die Liste von Verfolgungsbereichsidentitäten an das Mobilgerät (400) sendet.

3. Verfahren nach Anspruch 1 oder 2, wobei die Netzinstanz bestimmt, ob mindestens eine Verfolgungsbereichsidentität aus der weiteren Liste von Verfolgungsbereichsidentitäten, die vom Mobilgerät (400) an die Netzinstanz gesendet wird, in der Liste von Verfolgungsbereichsidentitäten enthalten ist.

4. Verfahren nach einem der vorhergehenden Ansprüche, wobei die Liste von Verfolgungsbereichsidentitäten Verfolgungsbereiche umfasst, innerhalb derer das Mobilgerät (400) keine Mobilitätssignalisierung durchführt.

5. Verfahren nach einem der vorhergehenden Ansprüche, wobei die weitere Liste von Verfolgungsbereichsidentitäten, die vom Mobilgerät (400) an die Netzinstanz gesendet wird, basierend auf historischen Daten einer Mobilität des Mobilgeräts (400) definiert ist.

6. Verfahren nach Anspruch 5, wobei die historischen Daten verwendet werden, um eine zukünftige Mobilität des Mobilgeräts (400) vorherzusagen.

7. Verfahren nach einem der vorhergehenden Ansprüche, wobei die weitere Liste von Verfolgungsbereichsidentitäten, die vom Mobilgerät (400) an die Netzinstanz gesendet wird, basierend auf Informationen definiert ist, die durch eine Anwendung empfangen werden, die im Mobilgerät (400) ausgeführt wird.

8. Verfahren nach Anspruch 7, wobei die Anwendung eine Navigationsanwendung ist.

9. Verfahren nach einem der vorhergehenden Ansprüche, wobei die Verfolgungsbereichsidentitäten, die zur weiteren Liste von Verfolgungsbereichsidentitäten gehören, durch einen Benutzer des Mobilgeräts (400) ausgewählt werden.

10. Mobilgerät (400) für ein Mobilkommunikationsnetz, wobei das Mobilgerät (400) umfasst:
- eine Sendereinheit (404) zum Senden und Empfangen von Listen von Registrierungsbereichen und Anzeigen von Registrierungsbereichen an eine bzw. von einer Netzinstanz und eine Speichereinheit (408) zum Speichern der Listen von Registrierungsbereichen und der Anzeigen von Registrierungsbereichen, **dadurch gekennzeichnet, dass** das Mobilgerät (400) ferner eine Verarbeitungseinheit (406) umfasst, die so ausgelegt ist, dass sie weitere Listen von Registrierungsbereichen und Anzeigen von Registrierungsbereichen erzeugt und sie zusammen als Teil einer Anschlussanforderungsnachricht (202) für eine Registrierung des Mobilgeräts an das Kommunikationsnetz sendet.

11. Mobilgerät nach Anspruch 10, die so ausgelegt ist, dass es ein Verfahren nach einem der Ansprüche 2 bis 9 durchführt.

12. Programm nach Anspruch 7, das so ausgelegt ist, dass es ein Verfahren nach einem der Ansprüche 1 bis 9 durchführt.

## Revendications

1. Procédé pour une mise à jour de zone de suivi d'un dispositif mobile (400) dans un réseau de communication, comprenant les étapes consistant à :
- envoyer par une entité de réseau (112) une liste d'identités de zone de suivi au dispositif mobile (400),
- envoyer par le dispositif mobile (400) une liste supplémentaire d'identités de zone de suivi à l'entité de réseau, **caractérisé en ce que**
la liste supplémentaire d'identités de zone de suivi est envoyée comme partie d'un message de demande de rattachement (202) pour en enregistrement du dispositif mobile dans le réseau de communication.

2. Procédé selon la revendication 1, dans lequel la liste supplémentaire d'identités de zone de suivi est envoyée à l'entité de réseau avant que l'entité de réseau envoie la liste d'identités de zone de suivi au dispositif mobile (400).

3. Procédé selon les revendications 1 ou 2, dans lequel l'entité de réseau détermine si au moins une identité de zone de suivi provenant de la liste supplémentaire d'identités de zone de suivi envoyées du dispositif mobile (400) à l'entité de réseau est incluse dans la liste d'identités de zone de suivi.

4. Procédé selon une quelconque des revendications précédentes, dans lequel la liste d'identités de zone de suivi inclut les zones de suivi à l'intérieur desquelles le dispositif mobile (400) n'effectue pas une signalisation de mobilité.

5. Procédé selon une quelconque des revendications précédentes, dans lequel la liste supplémentaire d'identités de zone de suivi envoyées du dispositif mobile (400) à l'entité de réseau est définie sur la base des données d'historique d'une mobilité du dispositif mobile (400).

6. Procédé selon la revendication 5, dans lequel lesdites données d'historique sont utilisées pour prédire une mobilité future du dispositif mobile (400).

7. Procédé selon une quelconque des revendications précédentes, dans lequel la liste supplémentaire d'identités de zone de suivi envoyées du dispositif mobile (400) à l'entité de réseau est définie sur la base des informations reçues par une application exécutée dans le dispositif mobile (400).

8. Procédé selon la revendication 7, dans lequel ladite application est une application de navigation.

9. Procédé selon une quelconque des revendications précédentes, dans lequel les identités de zone de suivi appartenant à la liste supplémentaire d'identités de zone de suivi sont sélectionnées par un utilisateur du dispositif mobile (400).

10. Dispositif mobile (400) pour un réseau de communication mobile, le dispositif mobile (400) comprenant :
- une unité d'émetteur/récepteur (404) pour émettre et recevoir des listes de zones d'enregistrement et des indications de zones d'enregistrement vers et depuis une entité de réseau et une unité de mémoire (408) pour mémoriser les listes de zones d'enregistrement et les indications de zones d'enregistrement, **caractérisé en ce que** le dispositif mobile (400) comprend en outre une unité de traitement (406) adaptée afin de générer des listes supplémentaires de zones d'enregistrement et des indications de zones d'enregistrement et les envoyer ensemble comme partie d'un message de demande de rattachement (202) pour un enregistrement du dispositif mobile dans le réseau de communication.

11. Dispositif mobile selon la revendication 10, adapté afin d'exécuter un procédé selon une quelconque des revendications 2 à 9.

12. Programme adapté afin d'exécuter un procédé selon une quelconque des revendications 1 à 9.
